Europäisches Patentamt

European Patent Office

Office européen des brevets

(11) Publication number: **0 070 926**

**B1**

# (12) EUROPEAN PATENT SPECIFICATION

(45) Date of publication of patent specification: **02.10.85**

(21) Application number: **81200859.7**

(22) Date of filing: **30.07.81**

(51) Int. Cl.⁴: **B 01 D 3/14,** B 01 D 3/42, C 10 G 7/12

(54) Process for the fractional distillation of crude oil.

(43) Date of publication of application:
**09.02.83 Bulletin 83/06**

(45) Publication of the grant of the patent:
**02.10.85 Bulletin 85/40**

(84) Designated Contracting States:
**BE DE FR GB IT NL**

(56) References cited:
**DE-A-2 153 162**
**FR-A-1 217 094**
**US-A-2 323 047**
**US-A-3 032 478**
**US-A-3 297 566**
**US-A-3 700 566**
**US-A-3 783 126**
**US-A-4 191 640**
**US-A-4 265 731**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Bannon, Robert Patrick**
**810 Thornwick Drive**
**Houston Texas 77079 (US)**

(74) Representative: **Aalbers, Onno et al**
**P.O. Box 302**
**NL-2501 CH The Hague (NL)**

Courier Press, Leamington Spa, England.

## Description

The invention relates to a process for the fractional distillation of crude oil.

The distillation of crude oil is normally carried out in multiple stage fractional distillation columns having a number of sidedraw product streams. In such columns, the liquid is vaporized or flashed in a lower flash zone, and flash vapour is fractionated in the upper portion of the column. The section of trays between the flash zone and the lowest sidedraw is called the de-entrainment section. The primary function of the de-entrainment section is to remove drops of liquid entrained in the vapour leaving the flash zone. Liquid from the bottom tray of the de-entrainment section, the distillate portion of which is sometimes called overflash, is either drained to the flash zone or recycled back to the crude heater.

Accordingly, the invention more specifically relates to a process for the fractional distillation of crude oil comprising vaporizing heated crude oil in the flash zone of a multiple tray fractional distillation column to produce a vapour which is fractionated in the upper sections of the column, withdrawing liquid product streams from a plurality of sidedraw trays, removing drops of liquid entrained in the vapour leaving the flash zone in a de-entrainment section containing a plurality of trays positioned between the flash zone and the lowest sidedraw tray and withdrawing a stream of condensed liquid from the first tray above the flash zone and recycling a first portion of this liquid to the flash zone or the crude heater.

Such a process is known from the French patent No. 1,217,094.

The process designer is faced with two conflicting design requirements for the de-entrainment section. Firstly, there must be sufficient reflux liquid on the trays to obtain effective contacting of liquid and vapour, and consequent removal of black oil drops entrained from the flash zone, and secondly, for maximum distillate yield and thermal efficiency, overflash should be as low as possible. In the typical design, a compromise must be made between these two requirements. Accordingly, a need has existed for an improved process for distillation of crude oil which overcomes these limitations.

The object of the present invention is to provide such an improved process and proposes to withdraw a second portion of the withdrawn stream of condensed liquid and to pass this stream to a tray below the lowest sidedraw tray but at least two trays above the lowest tray above the flash zone.

Utilization of the invention has a number of distinct advantages. To begin with, distillate yield is increased. In the embodiment shown, the circulation loop purge is only 10—20% of the liquid flow required from the bottom tray of the de-entrainment section not having a circulation loop. The difference in these two flows is the increase in distillate yield (decrease in overflash) due to the circulation loop. As a result of the invention, distillate quality is improved. The lowest sidedraw product will contain less heavy ends (entrained black oil) by employing the circulation loop of the invention. Moreover, coke formation should be reduced in the de-entrainment section. There is a tendency for coke formation to occur on hot metal surfaces in the de-entrainment section, especially at the lower (hotter) trays in the section. The high liquid flows possible with a circulation loop reduce coke formation by more effective washing of the metal surfaces.

The invention provides improved thermal efficiency. The higher distillate yield means, conversely, a lower straightrun residue yield. If the residue is further distilled in a vacuum flasher, as is the usual case, less flasher heater fuel will be required. Finally, if the straightrun residue goes to a vacuum flasher, its operation will be improved in addition to the fuel saving mentioned since it will have a lower feed rate, less light ends in the feed, higher temperature of the topmost heat removal stream so heat recovery potential is improved, improved vacuum system operation, and improved flash distillate yield in flashers operating at a capacity constraint.

The term "tray", as used herein, includes bubble cap, valve type, or perforated plate trays, or modifications thereof, as well as equivalent structures. Again, the term "column" is understood to include one structure, or two or more such units in series, the designations of "higher" and "upper" merely referring to cooler temperature areas of such unit or units.

From US patents 4,265,731, 2,323,047 and 3,700,566 fractionation columns are known in which a liquid stream is withdrawn from a tray and passed partly to a zone higher in the column and partly to a zone lower in the column. However, these columns do not comprise a de-entrainment section, i.e. a plurality of trays between the flash zone and the lowest sidedraw tray in a multiple tray fractional distillation column.

The invention will now be described by way of example in greater detail with reference to the drawings, wherein

Figure 1 represents schematically a manner of operation of the invention; and

Figure 2 represents schematically a manner of control of the liquid flows involved.

Preheated crude oil enters fractional distillation column 1 via line 2 where it is flashed in flash zone 3 to produce a vapour which is fractionated in the upper portion of the column. As shown, the trays below the lowest sidedraw tray 4 function as the de-entrainment section. In accordance with the invention, a withdrawal line 5 is provided at the first tray 6 above the flash zone 3. Liquid from tray 6 is drawn off in line 5 through pump 7 and returned to column 1 via line 8 to a location three trays higher in the column. The circulation rate is adjusted to provide adequate tray liquid for effective contacting and de-entrainment. At the same time, a small purge stream is taken from line 8 via line 9 to remove de-entrained black oil. The purge may be returned to the flash zone, as shown, or sent to the crude feed heater. The upper two or more de-entrainment section trays are not in the circulating oil loop, and they function to remove entrainment from the circulating oil, which contains some black oil. (There is normally a small amount of liquid entrainment between trays in a distillation column). Liquid flow on these trays is adequate for good tray action without recirculation.

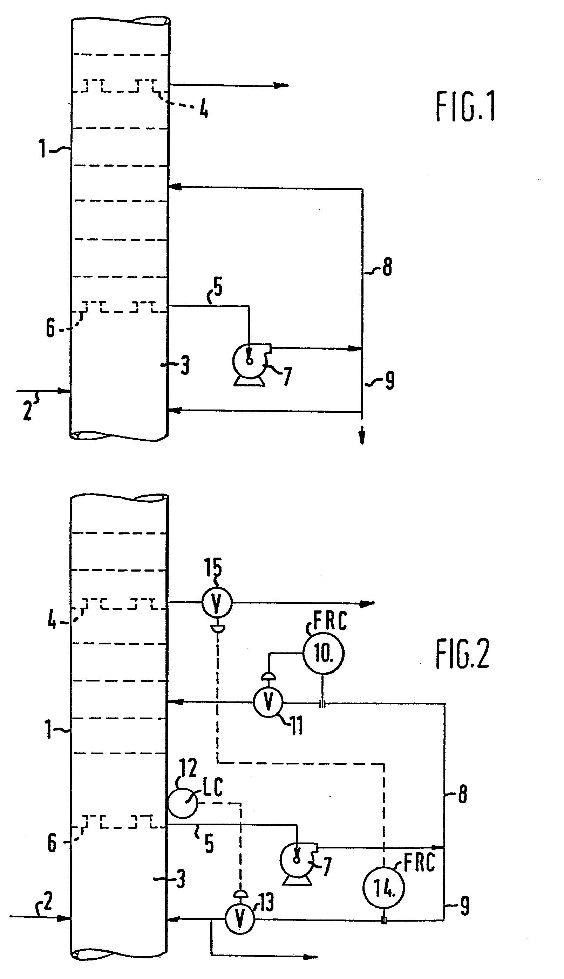

An example of the instrumentation for the circulating oil system is shown in Figure 2. Similar numbers refer to corresponding elements.

In this discussion, it is assumed that operation of column 1, generally, is similar to that described above in relation to Figure 1. To provide appropriate control, two flow rate controllers and a level control (or their computer analogues) are used. As shown, a sensor in line 8, in response to the flow rate in line 8, produces a signal which is compared with a predetermined value in flow rate controller 10, and flow rate controller 10 operates valve 11 to maintain a desired rate of flow to column 1.

Simultaneously, since it is similarly desirable to maintain a steady rate of flow in line 9, a sensor-flow rate controller-valve combination may be employed. Preferably, however, the flow of liquid to flash zone 3 is controlled in response to the liquid inventory on tray 6. More particularly, liquid level controller 12, in response to the level on tray 6, regulates valve 13, and thus the rate of flow to flash zone 3. The purge flow is controlled by adjusting the amount of liquid supplied to the de-entrainment zone, i.e., the liquid overflowing draw tray 4. Thus, in response to the rate of flow in line 9, flow rate controller 14 regulates valve 15, increasing or decreasing the flow of sidedraw liquid, and thereby decreasing or increasing the amount of liquid overflowing tray 4 into the de-entrainment zone.

**Claims**

1. Process for the fractional distillation of crude oil comprising vaporizing heated crude oil in the flash zone of a multiple tray fractional distillation column to produce a vapour which is fractionated in the upper sections of the column, withdrawing liquid product streams from a plurality of sidedraw trays, removing drops of liquid entrained in the vapour leaving the flash zone in a de-entrainment section containing a plurality of trays positioned between the flash zone and the lowest sidedraw tray and withdrawing a stream of condensed liquid from the first tray above the flash zone and recycling a first portion of this liquid to the flash zone or the crude heater, characterized in that a second portion of the withdrawn stream of condensed liquid is passed to a tray below the lowest sidedraw tray but at least two trays above the lowest tray above the flash zone.

2. Process as claimed in claim 1, characterized in that the first portion of the condensed liquid is returned to the flash zone in response to the level of liquid on the first tray above the flash zone and the rate of withdrawal of product from the lowest sidedraw tray is regulated in response to the rate of removal of the second portion of the condensed liquid.

3. Process as claimed in claim 1, characterized in that condensed liquid is withdrawn from the first tray above the flash zone in a recirculation line, and the first portion of the liquid is returned to the column at a relatively constant rate, the second portion of the liquid is withdrawn from the recirculation line in a purge line in response to the liquid on said tray, and wherein the rate of withdrawal of product from the lowest sidedraw tray in the column is regulated in response to the rate of flow of liquid in the purge line.

**Patentansprüche**

1. Verfahren zur fraktionierten Destillation von Rohöl, umfassend (das) Verdampfen von erhitztem Rohöl in der Flash-Zone einer mehrbödigen Fraktionierkolonne, um einen Dampf zu erzeugen, der in den oberen Bereichen der Kolonne fraktioniert wird, Abziehen von flüssigen Produktströmen von mehreren Seitenstrom-Böden, Abtrennen von mitgerissenen Flüssigkeitströpfchen aus dem Dampf, der die Flash-Zone verläßt, in einem Tröpfchen-Abscheidungsbereich, der mehrere Böden, angeordnet zwischen der Flash-Zone und dem untersten Seitenstrom-Boden, enthält, und Abziehen eines Stroms kondensierte Flüssigkeit von dem ersten Boden über der Flash-Zone und Rückführen eines ersten Anteils dieser Flüssigkeit in die Flash-Zone oder in den Rohöl-Erhitzer, dadurch gekennzeichnet, daß ein zweiter Anteil des abgezogenen Stroms aus kondensierter Flüssigkeit zu einem Boden geführt wird, der sich unterhalb des untersten Seitenstrom-Bodens, aber mindestens zwei Böden über dem untersten Boden über der Flash-Zone befindet.

2. Verfahren nach Anspruch 1, dadurch gekennzeichnet, daß der erste Anteil der kondensierten Flüssigkeit in die Flash-Zone in Abhängigkeit von dem Flüssigkeitsspiegel auf dem ersten Boden über der Flash-Zone zurückgeführt wird und die Abzugsgeschwindigkeit des Produktes aus dem untersten Seitenstrom-Boden in Abhängigkeit von der Geschwindigkeit der Entfernung des zweiten Anteils der kondensierten Flüssigkeit gesteuert wird.

3. Verfahren nach Anspruch 1, dadurch gekennzeichnet, daß kondensierte Flüssigkeit von dem ersten Boden über der Flash-Zone in einer Rückführleitung abgezogen wird und der erste Anteil der Flüssigkeit in die Kolonne mit einer relativ konstanten Geschwindigkeit zurückgeführt wird, der zweite Anteil der Flüssigkeit aus der Rückführleitung in einer Ablaufleitung abgezogen wird, in Abhängigkeit von der Flüssigkeit auf diesem Boden, und wobei die Abzugsgeschwindigkeit des Produktes von dem untersten Seitenstrom-Boden in der Kolonne in Abhängigkeit von der Fließgeschwindigkeit der Flüssigkeit in der Ablaufleitung gesteuert wird.

## Revendications

1. Procédé pour la distillation fractionnée de pétrole brut comprenant la vaporisation de pétrole brut chauffé dans la zone de vaporisation-éclair d'une colonne de distillation fractionnée à plateaux multiples de façon à produire une vapeur qui est fractionnée dans les parties supérieures de la colonne, le soutirage de courants de produits liquides d'une multiplicité de plateaux de soutirage latéral, l'enlèvement de gouttes de liquide entraînées dans la vapeur quittant la zone de vaporisation-éclair dans une zone de désentraînement contenant une multiplicité de plateaux situés entre le zone de vaporisation-éclair et le plus bas plateau de soutirage latéral et le soutirage d'un courant de liquide condensé du premier plateau au-dessus de la zone de vaporisation-éclair et le recyclage d'une première portion de ce liquide à la zone de vaporisation-éclair ou à l'appareil de chauffage du pétrole brut, caractérisé en ce qu'une seconde portion du courant soutiré de liquide condensé est passée à un plateau situé au-dessous de plus bas plateau de soutirage latéral, mais au moins deux plateaux au-dessus du plateau le plus bas au-dessus de la zone de vaporisation-éclair.

2. Procédé selon la revendication 1, caractérisé en ce que le première portion du liquide condensé est ramenée à la zone de vaporisation-éclair en réponse au niveau de liquide sur le premier plateau au-dessus de la zone de vaporisation-éclair et le débit de soutirage de produit du plus bas plateau de soutirage latéral est réglé en réponse au débit d'enlèvement de la seconde portion du liquide condensé.

3. Procédé selon la revendication 1, caractérisé en ce que du liquide condensé est soutiré du premier plateau au-dessus de la zone de vaporisation-éclair dans une canalisation de recirculation et la première portion du liquide est ramenée à la colonne à un débit relativement constant, la seconde portion du liquide est prélevée dans la canalisation de recirculation et passée à une canalisation de purge en réponse au liquide sur ledit plateau, et le débit de soutirage de produit du plus bas plateau de soutirage latéral dans la colonne est réglé en réponse au débit de liquide dans la canalisation de purge.

0 070 926

FIG.1

FIG.2